# EUROPÄISCHE PATENTSCHRIFT

(11) **EP 1 730 073 B1**
(45) Veröffentlichungstag und Bekanntmachung des Hinweises auf die Patenterteilung: **02.12.2015**
(21) Anmeldenummer: 05714994.0
(22) Anmeldetag: 18.02.2005
(51) Int. Cl.: C01B 3/04, B01J 19/10, F02M 27/04, F02M 25/12

(54) **VERFAHREN UND VORRICHTUNG ZUR ERZEUGUNG VON WASSERSTOFF**
METHOD AND DEVICE FOR THE GENERATION OF HYDROGEN
PROCEDE ET DISPOSITIF DE PRODUCTION D'HYDROGENE

(30) Priorität: 24.03.2004 DE 202004004729 U
(43) Veröffentlichungstag der Anmeldung: 13.12.2006
(73) Patentinhaber: Air-Tec Emission Reduction Systems GmbH & Co. KG, 86759 Wechingen (DE)
(72) Erfinder: WAGNER, Walter, 86759 Wechingen (DE)
(74) Vertreter: Cremer & Cremer
(86) Internationale Anmeldenummer: PCT/DE2005/000285
(87) Internationale Veröffentlichungsnummer: WO 2005/095266

(56) Entgegenhaltungen:
- EP-A- 0 383 565
- WO-A-91/12301
- WO-A-2004/008029
- CH-A5- 580 754
- DE-A1- 4 140 650
- GB-A- 806 230
- US-A- 4 064 852
- US-A- 4 476 817
- J. BÜTTNER ET AL.: "Sonolysis of water-methanol mixtures" JOURNAL OF PHYSICAL CHEMISTRY, Bd. 95, 1991, Seiten 1528-5130, XP002334474 USAMERICAN CHEMICAL SOCIETY

## Beschreibung

Die vorliegende Erfindung betrifft ein Verfahren und eine Vorrichtung zur Erzeugung von Wasserstoff bei der Verbrennung von Brennstoffen nach dem Oberbegriff des Anspruchs 1 bzw. 5. Weiter betrifft die Erfindung ein Mittel zum Einbau in Verbrennungskraftmaschinen oder Feuerungsanlagen zu r Verbesserung der Verbrennung von Brennstoffen darin gemäß dem Oberbegriff des Anspruchs 15.

Im Stand der Technik sind etliche Vorrichtungen zur Verbesserung der Verbrennung von Kraftstoffen bekannt. So ist zum Beispiel ein Gerät zur Steigerung des Brennwertes einer aus Öl oder Diesel- oder Benzinkraftstoffen bestehenden Flüssigkeit bekannt. Mit Hilfe dieses Gerätes wird der Kraftstoff mit einem hochfrequenten elektrischen Wechselfeld durch ein sich änderndes Magnetfeld beaufschlagt. Die Moleküle werden dadurch beschleunigt, wodurch Wirbelströmungen entstehen, die die kristallinen Strukturen im Kraftstoff zerstören und die eine Reduzierung der Oberflächenspannung bewirken. Als Folge davon weist der eingespritzte Kraftstoff einen stark reduzierten Tropfendurchmesser auf, wodurch der Wirkungsgrad verbessert werden soll. Diese bekannte Vorrichtung ist jedoch vergleichsweise schwierig einzubauen, wodurch s ich das Anwendungsgebiet begrenzt.

CH-A-580754, WO-A-2004/008029 und GB-A-806230 offenbaren einen Verbrennungsmotor mit Spulen um die Zufuhrleitungen. Die Spulen generieren ein Magnetfeld.

US-A4064852 offenbart die Verwendung von Mikrowellen in einem Vergaser (vgl. Anspruch 1; Spalte 1, Zeilen 22-32). In der Einleitung wird beschrieben, dass es auch bekannt ist Ultraschall für den gleichen Zweck zu verwenden.

US-A-4476817 offenbart die Verwendung von Ultraschall in einem Verbrennungsmotor, wobei Wasserstoff entsteht. Ultraschall wird zusammen mit Katalysatoren verwendet. Der Ultraschall wird mittels Pfeifen ("whistles") erzeugt.

Aufgabe der vorliegenden Erfindung ist daher, ein verbessertes Verfahren und eine verbesserte Vorrichtung zur Verbesserung der Verbrennung von Brennstoffen aller Art, insbesondere flüssigen oder gasförmigen Kraftstoffen bereitzustellen. Die Vorrichtung soll im Einbau vereinfacht sein und dennoch wirksam die Verbrennung optimieren.

Diese Aufgabe wird gelöst durch ein Verfahren nach Anspruch 1 und eine Vorrichtung nach Anspruch 3. Vorteilhafte Ausgestaltungen sind Gegenstand der Unteransprüche.

Gemäß der Erfindung ist ein Verfahren zur Erzeugung von Wasserstoff bei der Verbrennung von Brennstoffen in Verbrennungskraftmaschinen oder Feuerungsanlagen vorgesehen. Dabei werden der Brennstoff und/oder die Ansaugluft mit Schall beaufschlagt, wobei Wasserstoff erzeugt wird. Dies kann beispielsweise mit einer Spule erfolgen.

Es ist weiter eine Vorrichtung zur Erzeugung von Wasserstoff bei der Verbrennung von Brennstoffen in Verbrennungskraftmaschinen oder Feuerungsanlagen vorgesehen. Erfindungsgemäß sind Mittel vorgesehen, welche den Brennstoff und/oder die Ansaugluft mit Schall beaufschlagen, wobei Wasserstoff erzeugt wird. Ein solches Mittel ist beispielsweise eine Spule. Damit wird ein hochfrequentes elektrisches Wechselfeld erzeugt. Die erzeugten Frequenzen liegen im Bereich des hörbaren Schalls bis hin zum Ultraschallbereich. Die Spulen werden jeweils mit Wechselstrom, vorzugsweise in Form von Rechteckimpulsen beaufschlagt. Die Frequenz des Wechselstroms durchläuft in einer bestimmten Zeit ein gewisses Frequenzintervall.

Durch das erfindungsgemäße Verfahren und die erfindungsgemäße Vorrichtung wird die Verbrennung von Brennstoffen, insbesondere gasförmigen oder flüssigen Kraftstoffen, jedoch auch festen Brennstoffen und von Verbrennungsluft in Verbrennungskraftmaschinen und Feuerungsanlagen optimiert. Es kommt dadurch zu einer Leistungssteigerung, die Abgaswerte werden verbessert und es ergibt sich eine Ersparnis von Brennstoffen, wie z. B. Kraftstoffen. Durch die optimierte Verbrennung wird auch der Katalysator oder der Rußfilter in beispielsweise Kraftfahrzeugen geschont. Im Ergebnis ergibt sich neben einer positiven ökologischen Bilanz - die Umwelt wird entlastet - auch eine enorme Betriebskostenersparnis. Der vorliegende Anmelder hat eine erfindungsgemäße Vorrichtung, eingebaut in einem Kraftfahrzeug, einer amtlichen Untersuchung unterzogen. Dabei wurden eine Verbrauchsreduzierung und eine Leistungssteigerung erreicht. Der Ausstoß von Kohlenmonoxid und schädlichen Stickoxiden wurde stark reduziert, bei gleichzeitig erhöhter Leistung, die im Bereich von bis zu 3 % lag. Schließlich ergab sich auch eine reduzierte CO₂-Emission und ein reduzierter Kraftstoffverbrauch.

Grundlage hierfür ist die Tatsache, dass im Brennstoff und der Luft große Mengen an Wasser oder Wasserdampf enthalten sind. Durch das Einwirken von Schall treten in dem Brennstoff, wie auch in der Verbrennungsluft, große Schalldrücke auf. Hierdurch wird Kavitation im Brennstoff und in der Verbrennungsluft erzeugt. Bei diesem Phänomen verdampft das Wasser in einem kleinen Bereich des Brennstoffes und der Verbrennungsluft und bildet Bläschen, die sich vergrößern, um schließlich bei einer kritischen Größe sehr plötzlich zu kollabieren. Bei der Implosion dieser Gasbläschen entstehen Gasstrahlen, es treten sehr hohe Temperaturen bis 5000 K und Drücke bis 5000 bar auf, sowie extrem hohe Geschwindigkeiten (http://www.wissen.de). Dadurch treten sehr hohe Scherkräfte auf, die dazu geeignet sind, auch große Moleküle oder Molekülketten zu zerreißen. Im Brennstoff und in der Verbrennungsluft vorhandenes Wasser und Wasserdampf werden durch diese Vorgänge in Wasserstoff und Sauerstoff gespalten. Ein mit der erfindungsgemäßen Vorrichtung behandelter Brennstoff und mit ihr behandelte Verbrennungsluft enthalten somit einen erhöhten Anteil an Wasserstoff und Sauerstoff im Vergleich zu unbehandeltem Brennstoff bzw. unbehandelter Verbrennungsluft. Dieser Anteil an Wasserstoff und Sauerstoff ist es jedoch, der zu der optimierten Verbrennung, Leistungssteigerung und Brennstoffersparnis führt. Aus dem ansonsten nicht nutzbaren Wasser und Wasserdampf im Brennstoff und der Verbrennungsluft wird folglich für die Verbrennung nutzbarer Wasserstoff und Sauerstoff erzeugt. Diese werden unmittelbar der Verbrennung zugeführt. Wichtig ist auch, dass prinzipiell alle Brennstoffe behandelt werden können - feste, flüssige und gasförmige Brennstoffe.

Wie oben ausgeführt, ist erfindungsgemäß für die Erzeugung des Schalls eine Spule vorgesehen, mit welcher ein hochfrequentes elektrisches Wechselfeld erzeugt wird. Diese Spule kann bspw. um die Brennstoffleitung und/oder die Luftleitung einer Verbrennungsanlage herumgewickelt sein. Alternativ dazu kann die Spule jedoch auch auf einer gesonderten Platte oder Zylinder oder einem stabförmigen Element angeordnet sein. Dieses Element mit Spule kann dann wiederum im Bereich der Luft- oder Brennstoffzufuhr, z. B. im Bereich der Luftleitung und/oder der Brennstoffleitung und/oder des Brennraums angeordnet werden. Es ist nicht notwendig, dass die Spule unmittelbar mit der Brennstoffleitung und /oder der Luftleitung in Berührung steht. Sie kann einen gewissen Abstand dazu einnehmen. Ein möglicher Ort der Anordnung ist z. B. der Luftfilter/Ansaugtrakt, an dem das Element mit der Spule befestigt werden kann. Hierdurch ergibt sich insbesondere im Kraftfahrzeug ein vereinfachter Einbau, da der Luftfilter/Ansaugtrakt in der Regel bei einem solchen sehr gut zugänglich ist.

Die Spule kann folglich sowohl im Bereich der Brennstoffzufuhr als auch im Bereich der Luftzufuhr angeordnet sein. Dabei kann diese sowohl nur im Bereich der Luft- oder Brennstoffzufuhr vorgesehen sein, als auch in beiden Bereichen gleichzeitig. Schließlich können auch jeweils mehrere Spulen einer Baueinheit zugeordnet werden.

Nach einem weiteren Aspekt der Erfindung ist ein Mittel zum Einbau in Verbrennungskraftmaschinen oder Feuerungsanlagen zur Verbesserung der Verbrennung von Brennstoffen in diesen vorgesehen. Das Mittel ist im Bereich der Zufuhr von Brennstoffen und/oder der Ansaugluft, insbesondere im Bereich einer Brennstoffleitung und/oder einer Luftleitung der Verbrennungskraftmaschine oder Feuerungsanlage anordenbar. Mit dem Mittel sind der Brennstoff und/oder die Ansaugluft mit Schall beaufschlagbar, wobei Wasserstoff erzeugt wird.

Es ist ferner vorgesehen, dieses Mittel als Bausatz zum nachträglichen Einbau in obige Verbrennungsanlagen zur Verfügung zu stellen. Insbesondere bei der vorgesehenen Anordnung nur im Bereich der Luftzufuhr ist der Einbau und Aufbau im Vergleich zum Stand der Technik stark vereinfacht. Eine erhebliche Zeitersparnis ist damit realisierbar. Somit ist vorteilhaft, dass das vorgeschlagene Mittel auch nachträglich noch einfach in bestehende Verbrennungskraftmaschinen und Verbrennungsanlagen einzubauen ist.

Nachfolgend wird die Erfindung anhand der einzigen Figur näher erläutert und beschrieben.

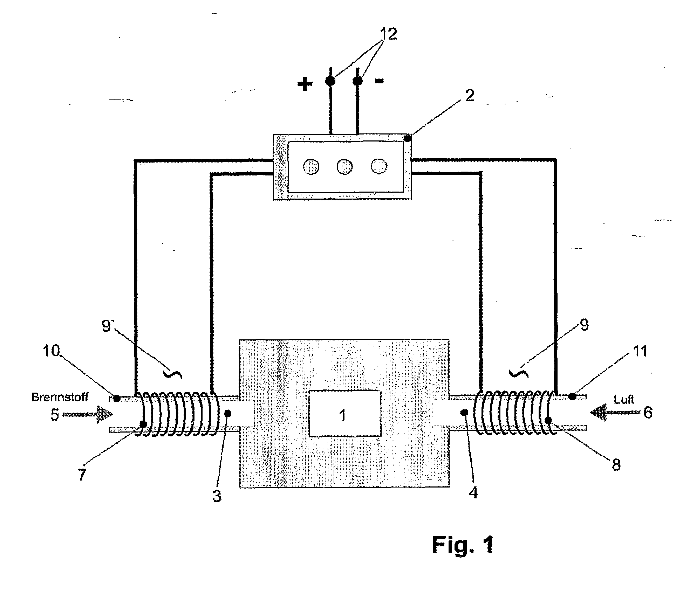

Figur 1 zeigt eine schematische Darstellung mit allen wesentlichen Komponenten der erfindungsgemäßen Vorrichtung. Ein Verbrennungssystem 1 ist mit einer Luftleitung 4 und einer Brennstoffleitung 3 verbunden. Über die Brennstoffleitung 3 wird Kraftstoff 5 zugeführt und über die Luftleitung 4 wird dem Verbrennungssystem 1 Luft 6 zugeführt. Sowohl um die Brennstoffleitung 3 als auch um die Luftleitung 4 sind erfindungsgemäß jeweils eine Spule 7 bzw. 8 herumgewickelt. Diese Spulen 7 und 8 sind jeweils mit Wechselstrom 9, 9' beaufschlagt. Zur Erzeugung des Wechselstroms 9, 9' und zur Steuerung der Spulen 7, 8 ist ein Steuergerät 2 vorgesehen, das über die Kabel 12 mit einer Stromquelle, bspw. der Fahrzeugbatterie verbunden ist.

Die mit Wechselstrom beaufschlagten Spulen erzeugen Schall. Es kann sich hierbei sowohl um Infraschall als auch um Ultraschall handeln. Der über die Brennstoffleitung 3 dem Verbrennungssystem 1 zugeführte Brennstoff bzw. die über die Luftleitung 4 zugeführte Luft wird mit dem Schall beaufschlagt. Die Übertragung des Schalls auf den in den Leitungen 3, 4 vorhandenen Brennstoff oder Luft ist dabei unabhängig vom Material der Wandungen 10, 11 der Brennstoffleitung 3 bzw. der Luftleitung 4.

## Patentansprüche

1. Verfahren zur Erzeugung von Wasserstoff bei der Verbrennung von Brennstoffen in Verbrennungskraftmaschinen oder Feuerungsanlagen, wobei der Brennstoff und/oder die Ansaugluft mit Schall beaufschlagt wird, **dadurch gekennzeichnet, dass** die Schallbeaufschlagung mittels zumindest einer Spule erfolgt, wobei eine Frequenz eines Wechselstroms, der an der Spule (7, 8) anliegt, ein gewisses Frequenzintervall im Bereich des hörbaren Schalls bis hin zum Ultraschallbereich in einer gewissen Zeit durchläuft, wobei durch Kavitation aus Wasser oder Wasserdampf Wasserstoff erzeugt wird.

2. Verfahren nach Anspruch 1, **dadurch gekennzeichnet, dass** die Spule (7, 8) jeweils mit Wechselstrom (9, 9') in Form von Rechteckimpulsen beaufschlagt wird.

3. Vorrichtung zur Erzeugung von Wasserstoff bei der Verbrennung von Brennstoffen in Verbrennungskraftmaschinen oder Feuerungsanlagen, wobei zumindest eine Spule (7, 8) vorgesehen ist, wobei die Spule jeweils mit Wechselstrom (9, 9') beaufschlagbar ist und um ein Element gewickelt ist, welches im Bereich der Brennstoffzufuhr und/oder der Luftzufuhr angeordnet ist,
**dadurch gekennzeichnet, dass**
die Spule (7, 8) den Brennstoff und/oder die Ansaugluft mit Schall beaufschlägt, wobei durch Kavitation aus Wasser oder Wasserdampf Wasserstoff erzeugt wird,
wobei die Frequenz des Wechselstroms im Bereich von hörbaren Schwingungen oder im Ultraschallbereich liegt und in einer bestimmten Zeit ein gewisses Frequenzintervall durchläuft.

4. Vorrichtung nach Anspruch 3, **dadurch gekennzeichnet, dass** das Element, um das die Spule (7, 8) gewickelt ist, eine Platte, ein Zylinder, eine Manschette oder ein Stab ist.

5. Vorrichtung nach Anspruch 3, **dadurch gekennzeichnet, dass** die Spule (7, 8) um eine Brennstoffleitung (3) und/oder eine Luftleitung (4) gewickelt ist.

6. Vorrichtung nach einem der Ansprüche 3 - 5, **dadurch gekennzeichnet, dass** das Element an oder in dem Luftfilter und/oder am oder im Ansaugtrakt angeordnet ist.

7. Vorrichtung nach Anspruch 5, **dadurch gekennzeichnet, dass** für jede Brennstoffleitung (3) und/oder Luftleitung (4) mehrere Spulen (7, 8) vorgesehen sind.

8. Vorrichtung nach einem der Ansprüche 3 - 7, **dadurch gekennzeichnet, dass** die Spule (7, 8) jeweils mit Wechselstrom (9, 9') in Form von Rechteckimpulsen beaufschlagbar ist.

9. Vorrichtung nach einem der Ansprüche 3 - 8, **dadurch gekennzeichnet, dass** die Spule (7, 8) an/in der Luftleitung (4) einer Verbrennungskraftmaschine angeordnet ist.

10. Vorrichtung nach Anspruch 9, **dadurch gekennzeichnet, dass** die Spule (7, 8) im Bereich eines Ansaugstutzens und/oder im Bereich eines Turboladers und/oder im Bereich zwischen Turbolader und Ansaugstutzen und/oder im Bereich zwischen Turbolader und Brennraum angeordnet ist.

11. Vorrichtung nach einem der Ansprüche 3 - 10, **dadurch gekennzeichnet, dass** die Spule (7, 8) in/um ein Verbrennungssystem (1) und/oder einen Brennraum, insbesondere eines Verbrennungsmotors oder einer Feuerungsanlage angeordnet ist.

## Claims

1. Method for the generation of hydrogen on the combustion of fuels in internal combustion engines or furnaces, wherein the fuel and/or the intake air are subjected to sound, **characterized in that** the subjection to sound is effected by means of at least one coil, wherein a frequency of an alternating current applied to the coil (7, 8) runs through a certain frequency interval in a range of audible sound to a range of ultrasound in a certain time, wherein hydrogen is generated from water or water vapor by means of cavitation.

2. Method according to claim 1, **characterized in that** in each case the coil (7, 8) is applied with alternating current (9, 9') in form of square pulses.

3. Device for the generation of hydrogen on the combustion of fuels in internal combustion engines or furnaces, wherein at least one coil (7, 8) is provided, wherein the coil is in each case applicable with alternating current (9, 9') and is coiled around an element, which is arranged in the region of the fuel supply and/or the air supply,
**characterized in that**
the coil (7, 8) subjects the fuel and/or the intake air to sound, wherein hydrogen is generated from water or water vapor by means of cavitation,
wherein frequency of the alternating current is in a range of audible vibrations or in an ultrasound range and runs through a certain frequency interval in a certain time.

4. Device according to claim 3, **characterized in that** the element, which the coil (7, 8) is coiled around, is a plate, a cylinder, a sleeve or a rod.

5. Device according to claim 3, **characterized in that** the coil (7, 8) is coiled around a fuel line (3) and/or an air duct (4).

6. Device according to one of the claims 3 to 5, **characterized in that** the element is arranged on or in the air filter and/or on or in the intake tract.

7. Device according to claim 5, **characterized in that** multiple coils (7, 8) are provided for each fuel line (3) and/or air duct (4).

8. Device according to one of the claims 3 to 7, **characterized in that** in each case the coil (7, 8) is applicable with alternating current (9, 9') in form of square pulses.

9. Device according to one of the claims 3 to 8, **characterized in that** the coil (7, 8) is arranged on/in the air duct (4) of an internal combustion engine.

10. Device according to claim 9, **characterized in that** the coil (7, 8) is arranged in the region of an intake port and/or in the region of a turbocharger and/or in the region between turbocharger and intake port and/or in the region between turbocharger and combustion chamber.

11. Device according to one of the claims 3 to 10, **characterized in that** the coil (7, 8) is arranged in/around a combustion system (1) and/or a combustion chamber, in particular of an internal combustion engine or a furnace.

## Revendications

1. Procédé pour produire de l'hydrogène lors de la combustion de combustibles dans des moteurs à combustion interne ou des installations de combustion, le combustible et/ou l'air aspiré étant exposé au son, **caractérisé en ce que** l'exposition au son se fait au moyen d'au moins une bobine, une fréquence d'un courant alternatif qui est appliqué à la bobine (7, 8) traversant un certain intervalle de fréquence dans la plage du son audible jusqu'à la plage des ultrasons pendant un certain temps, cependant que de l'hydrogène est produit par cavitation à partir de l'eau ou de la vapeur d'eau.

2. Procédé selon la revendication 1, **caractérisé en ce que** la bobine (7, 8) est alimentée respectivement avec du courant alternatif (9, 9') sous forme d'impulsions rectangulaires.

3. Dispositif pour produire de l'hydrogène lors de la combustion de combustibles dans des moteurs à combustion interne ou des installations de combustion, au moins une bobine (7, 8) étant prévue, la bobine pouvant être alimentée respectivement avec du courant alternatif (9, 9') et étant enroulée autour d'un élément qui est placé dans la zone de l'alimentation en combustible et/ou de l'alimentation en air, **caractérisé en ce que** la bobine (7, 8) expose le combustible et/ou l'air aspiré au son, cependant que de l'hydrogène est produit par cavitation à partir de l'eau ou de la vapeur d'eau, cependant que la fréquence du courant alternatif se situe dans la plage des oscillations audibles ou dans la plage des ultrasons et traverse un certain intervalle de fréquences pendant un certain temps.

4. Dispositif selon la revendication 3, **caractérisé en ce que** l'élément autour duquel la bobine (7, 8) est enroulée est une plaque, un cylindre, une manchette ou une tige.

5. Dispositif selon la revendication 3, **caractérisé en ce que** la bobine (7, 8) est enroulée autour d'une conduite de combustible (3) et/ou autour d'une conduite d'air (4).

6. Dispositif selon l'une des revendications 3 à 5, **caractérisé en ce que** l'élément est placé sur ou dans le filtre à air et/ou sur ou dans le circuit d'aspiration.

7. Dispositif selon la revendication 5, **caractérisé en ce que** plusieurs bobines (7, 8) sont prévues pour chaque conduite de combustible (3) et/ou conduite d'air (4).

8. Dispositif selon l'une des revendications 3 à 7, **caractérisé en ce que** la bobine (7, 8) peut être alimentée respectivement avec du courant alternatif (9, 9') sous forme d'impulsions rectangulaires.

9. Dispositif selon l'une des revendications 3 à 8, **caractérisé en ce que** la bobine (7, 8) est placée sur/dans la conduite d'air (4) d'un moteur à combustion interne.

10. Dispositif selon la revendication 9, **caractérisé en ce que** la bobine (7, 8) est placée dans la zone d'une tubulure d'aspiration et/ou dans la zone d'un turbocompresseur et/ou dans la zone entre le turbocompresseur et la tubulure d'aspiration et/ou dans la zone entre le turbocompresseur et l'espace de combustion.

11. Dispositif selon l'une des revendications 3 à 10, **caractérisé en ce que** la bobine (7, 8) est placée dans/autour d'un système de combustion (1) et/ou dans un espace de combustion, en particulier d'un moteur à combustion interne ou d'une installation de combustion.
